# EUROPÄISCHE PATENTSCHRIFT

(11) **EP 1 827 866 B1**
(45) Veröffentlichungstag und Bekanntmachung des Hinweises auf die Patenterteilung: **27.05.2009**
(21) Anmeldenummer: 05803134.5
(22) Anmeldetag: 23.11.2005
(51) Int. Cl.: B42D 15/10, B42D 15/00

(54) **SICHERHEITSDOKUMENT MIT LICHTQUELLE UND LICHTVERARBEITUNGSVORRICHTUNG**
SECURITY DOCUMENT COMPRISING A LIGHT SOURCE AND A LIGHT-PROCESSING DEVICE
DOCUMENT DE SECURITE COMPRENANT UNE SOURCE LUMINEUSE ET DISPOSITIF DE TRAITEMENT DE LA LUMIERE

(30) Priorität: 23.11.2004 CH 19272004
(43) Veröffentlichungstag der Anmeldung: 05.09.2007
(73) Patentinhaber: Orell Füssli Sicherheitsdruck AG, 8003 Zürich (CH)
(72) Erfinder: EICHENBERGER, Martin, CH-8702 Zollikon (CH)
(74) Vertreter: Sutter, Kurt
(86) Internationale Anmeldenummer: PCT/CH2005/000690
(87) Internationale Veröffentlichungsnummer: WO 2006/056089

(56) Entgegenhaltungen:
- EP-A- 1 236 584
- EP-A- 1 266 768
- EP-A- 1 431 062
- WO-A-03/057502
- WO-A-20/04009373
- DE-A1- 19 735 293
- US-A- 5 857 709
- US-B1- 6 234 537

## Beschreibung

Die Erfindung betrifft ein Sicherheitsdokument gemäss Oberbegriff von Anspruch 1.

Derartige Sicherheitsdokumente besitzen ein in der Regel flexibles Substrat, auf dem mindestens ein Sicherheitsmerkmal zur Verifikation der Echtheit des Sicherheitsdokuments angeordnet ist.

Insbesondere für Banknoten oder Pässe wurden unter anderem Volumen- oder Oberflächenhologramme bzw. Beugungsgitter als Sicherheitsmerkmal vorgeschlagen. Zwar sind derartige Merkmale schwierig zu fälschen, doch werden in die Fälschung derartiger Dokumente beträchtliche Mittel investiert, so dass die Sicherheit nicht absolut sein kann.

EP 1 236 584 und US 6 234 537 beschrieben Sicherheitsdokumente, auf welchen jeweils eine Lichtquelle und Lichtverarbeitungsvorrichtung sind, wobei die Lichtverarbeitungsvorrichtung das licht von der Lichtquelle verarbeitet.

Es stellt sich deshalb die Aufgabe, ein Sicherheitsdokument der eingangs genannten Art bereitzustellen, das die Fälschungssicherheit weiter verbessert.

Diese Aufgabe wird von Sicherheitsdokument gemäss Anspruch 1 gelöst. Erfindungsgemäss ist am Sicherheitsdokument also mindestens eine Lichtquelle vorgesehen, sowie eine Lichtverarbeitungsvorrichtung, die das Licht von der Lichtquelle verarbeitet, indem sie es ablenkt, reflektiert, polarisiert und/oder teilweise absorbiert. Durch die charakteristischen Eigenschaften des Lichts nach der Lichtverarbeitungsvorrichtung, die ein Prüfer oder Prüfgerät verifizieren kann, wird die Sicherheit erhöht, denn ein Fälscher müsste nicht nur die Lichtquelle, sondern auch die Lichtverarbeitungsvorrichtung fälschen.

Erfindungsgemäss weist die Lichtverarbeitungsvorrichtung ein Transmissions-Volumenhologramm und ein Reflektions-Volumenhologramm auf.

Unter dem Begriff Lichtquelle wird ein Bauteil verstanden, dass in der Lage ist, in aktiver Weise (d.h. nicht durch blosse Reflektion) Licht auszusenden. Beispielsweise kann die Lichtquelle eine oder mehrere der folgenden Technologien einsetzen:
- Leuchtdioden, wobei sowohl organische, als auch anorganische Leuchtdioden zum Einsatz kommen können. Leuchtdioden sind aufgrund ihrer Kompaktheit und niederen Betriebstemperatur vorteilhaft.
- Andere elektrolumineszente Materialien, die mittels einem elektrischen Strom bzw. einem elektrischen Feld zum Leuchten gebracht werden können.
- Materialien, die durch Bestrahlung mit sichtbarem, infraroten oder ultraviolettem Licht zum Leuchten angeregt werden können. Hierzu gehören fluoreszente oder phosphoreszente Materialien. Fluoreszente Materialien können z.B. mittels kurzwelligem Licht zum Aussenden von Licht einer grösseren Wellenlänge angeregt werden. Phosphoreszente Materialien zeichnen sich dadurch aus, dass zwischen Anregung und Emission eine relativ grosse Zeit vergeht, so dass sie nach einer Anregung nachleuchten. Auch nichtlinear-optische Materialien können in der Lichtquelle eingesetzt werden. Derartige Materialien sind u.a. in der Lage, die Frequenz von einfallendem Licht zu vervielfachen.

Ausführungen von Sicherheitsdokumenten mit Lichtverarbeitungsvorrichtungen sind in der Beschreibung anhand der Figuren dargestellt. Diese geben nicht das erfindungsgemäße Sicherheitsdokument wieder, sondern dienen vielmehr dem Verständnis der Erfindung.
Fig. 1 ein Sicherheitsdokument in Form einer Banknote,
Fig. 2 einen Schnitt durch eine Ausführung eines Sicherheitsmerkmals mit einer elektrolumineszenten Lichtquelle mit induktiver Speisung und Volumenhologramm,
Fig. 3 einen Schnitt durch eine Ausführung eines Sicherheitsmerkmals mit einer elektrolumineszenten Lichtquelle mit kapazitiver Speisung und Volumenhologramm,
Fig. 4 einen Schnitt durch eine Ausführung eines Sicherheitsmerkmals mit einer elektrolumineszenten Lichtquelle mit induktiver Speisung und Oberflächenhologramm,
Fig. 5 einen Schnitt durch eine Ausführung eines Sicherheitsmerkmals mit einer elektrolumineszenten Lichtquelle mit induktiver Speisung und reflektivem Oberflächenhologramm,
Fig. 6 einen Schnitt durch eine Ausführung eines Sicherheitsmerkmals mit elektrolumineszenter Lichtquelle, induktiver Speisung und Wellenleiteroptik,
Fig. 7 einen Schnitt durch eine Ausführung eines Sicherheitsmerkmals mit kompakter Lichtquelle, induktiver Speisung und Wellenleiteroptik,
Fig. 8 einen Schnitt durch eine Ausführung eines Sicherheitsmerkmals mit einer elektrolumineszenten Lichtquelle, induktiver Speisung und Mikrolinsen,
Fig. 9 einen Schnitt durch eine Ausführung eines Sicherheitsmerkmals mit einer elektrolumineszenten Lichtquelle, induktiver Speisung und einer Lochmaske,
Fig. 10 einen Schnitt durch eine Ausführung eines Sicherheitsmerkmals mit einer elektrolumineszenten Lichtquelle, induktiver Speisung, Lochmaske und Volumenhologramm,
Fig. 11 einen Schnitt durch eine Ausführung eines Sicherheitsmerkmals mit einer fluoreszenten, phosphoreszenten oder nichtlinear-optischen Lichtquelle,
Fig. 12 einen Schnitt durch eine Ausführung eines Sicherheitsmerkmals mit einer elektrolumineszenten Lichtquelle, die direkt in einem externen Feld angeregt wird und
Fig. 13 einen Schnitt durch eine Ausführung eines Sicherheitsmerkmals mit einer elektrolumineszenten Lichtquelle, induktiver Speisung und Maske.

### Grundaufbau:

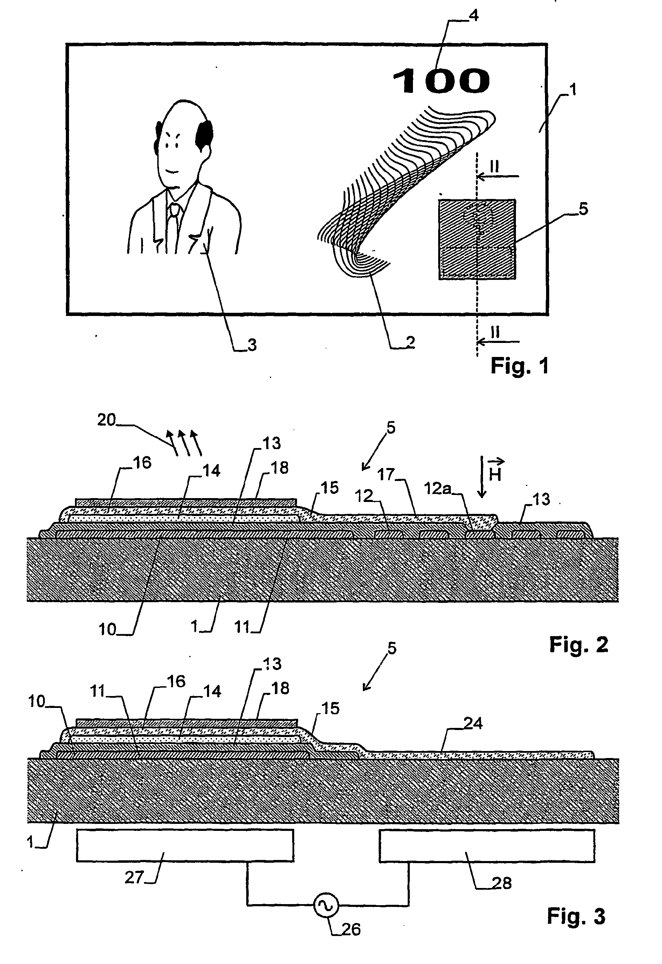

Der Grundaufbau eines Sicherheitsdokuments im Beispiel einer Banknote ist in Fig. 1 dargestellt. Das Sicherheitsdokument besitzt ein flexibles Substrat 1 aus Papier oder Kunststoff, auf dem in bekannter Weise graphische Elemente z.B. in der Form von Sicherheitszeichen 2, Illustrationen 3 und Wertangaben 4 aufgedruckt sind. Zusätzlich besitzt die Banknote ein Sicherheitsmerkmal 5, dessen Aufbau als Beispiel zuerst in einer ersten Ausführung gemäss Fig. 2 beschrieben wird.

Fig. 2 zeigt einen Schnitt entlang Linie II-II von Fig. 1. Wie ersichtlich, wird das Sicherheitsmerkmal 5 von einer Schichtstruktur gebildet, die vorzugsweise Drucktechnisch auf das Substrat 1 oder einen an das Substrat 1 zu befestigenden Träger aufgebracht wird.

Eine untere leitfähige Schicht 10 besteht aus einem leitenden Material und bildet einerseits eine z.B. rechteckige Elektrode 11 und eine Spule 12. Auf der unteren leitfähigen Schicht 10 ist eine isolierende, dielektrische Schicht 13 angeordnet. Sie deckt die untere leitfähige Schicht 10 ab, ist aber im Bereich eines Abgriffs 12a der Spule 12 ausgespart. Auf der dielektrischen Schicht 13 befindet sich oberhalb der Elektrode eine ebenfalls ungefähr rechteckige elektrolumineszente Schicht 14. Über die elektrolumineszente Schicht 14 ist eine durchsichtige, obere leitfähige Schicht 15 gelegt. Diese bildet eine Elektrode 16 über der elektrolumineszenten Schicht 14 sowie eine Leiterbahn 17, welche mit dem Abgriff 12a der Spule 12 verbunden ist. Oberhalb der oberen leitfähigen Schicht 15 ist im Bereich der elektrolumineszenten Schicht 14 ein Volumenhologramm 18 vorgesehen. Geeignete Materialien und Techniken zur Herstellung der einzelnen Schichten werden weiter unten beschrieben.

Die Funktionsweise des Sicherheitsmerkmals 5 ist wie folgt: Um das Merkmal zu prüfen, wird die Spule 12 in bzw. über ein Lesegerät gebracht, welches ein magnetisches Wechselfeld H erzeugt. Dieses induziert in der Spule eine Spannung 12, die sodann über den Elektroden 11 und 16 anliegt und in der elektrolumineszenten Schicht 14 einen Strom erzeugt und diese zum Leuchten anregt. Das so erzeugte Licht durchtritt die transparente obere Elektrode 16 und das Volumenhologramm 18. Die Beugungsstrukturen im Volumenhologramm 18 sind so angeordnet, dass sie zumindest einen Teil des Lichts von der elektrolumineszenten Schicht 14 beugen und ein charakteristisches Beleuchtungsmuster 20 erzeugen, welches vom Prüfer visuell oder apparativ verifiziert werden kann.

Generell besteht das Sicherheitsmerkmal 5 aus einer Lichtquelle, z.B. in Form des elektrolumineszenten Bauteils gemäss Fig. 2, und einer Lichtverarbeitungsvorrichtung, z.B. in Form des Volumenhologramms 18 von Fig. 2. Je nach Ausführung benötigt das Sicherheitsmerkmal 5 ferner eine Stromversorgung, z.B. in Form der Spule 12 von Fig. 2. Mögliche Ausführungsbeispiele dieser Komponenten werden im Folgenden diskutiert.

### Lichtquelle:

Die Lichtquelle muss geeignet sein, um auf das jeweilige Substrat 1 aufgebracht zu werden und mit der Lichtverarbeitungsvorrichtung zusammenzuwirken. Sie kann im wesentlichen monochrom oder polychrom sein, wodurch, wie weiter unten beschrieben, charakteristische Effekte im Zusammenwirken mit der Lichtverarbeitungsvorrichtung erzielt werden können. Der Begriff "monochromes Licht" wird dabei so verstanden, dass das Licht für den menschlichen Beobachter auch nach einer Farbzerlegung z.B. in einem Prisma als einfarbig erscheint, während der Begriff "polychromes Licht" so zu verstehen ist, dass das Licht nach einer Farbzerlegung für den menschlichen Beobachter farblich klar unterscheidbare spektrale Anteile enthält.

Für die Lichtquelle kommen verschiedenste Technologien in Frage. Einige besonders vorteilhafte Möglichkeiten sind:

### Elektrolumineszente Materialien

Das Phänomen der Elektrolumineszenz beschreibt generell die Lichtemission von Materialien, wenn diese von einem Strom durchflossen werden. Konkret existieren verschiedene Stoffe, von denen bekannt ist, dass sie, z.B. bei Anordnung zwischen zwei Elektroden und Anlegen einer ausreichenden elektrischen Spannung, Licht emittieren. Derartige Materialien können in der vorliegenden Anwendung vorteilhaft eingesetzt werden.

Insbesondere die sogenannten organischen Leuchtdioden (OLED oder PLED) fallen unter diese Materialklasse. Diese haben den Vorteil, dass sie flexibel hergestellt werden können. Geeignete Bauteile sind z.B. in US 6 750 472 beschrieben.

Besonders bevorzugt sind Materialien, die drucktechnisch auf das Substrat aufgebracht werden können. Beispielsweise bietet die Firma DuPont (Bristol, UK) unter dem Markennamen "Luxprint" einen Satz von Materialien an, der es erlaubt, geeignete Lichtquellen mittels Drucktechnik zu fertigen. Mittels Drucktechnik aufbringbare elektrolumineszente Materialien werden hier als elektrolumineszente Tinten bezeichnet.

Im Ausführungsbeispiel nach Fig. 2 kann bei Verwendung der Luxprint-Materialien als elektrolumineszente Schicht 14 z.B. einer der Leuchtstoffe 8150 (weiss), 8152 (blaugrün), 8154 (gelbgrün) oder 8164 (hellgelb) eingesetzt werden, je nach gewünschter Farbe des emittierten Lichts. Geeignete Materialien für die übrigen Schichten können z.B. der Beschreibung "Processing Guide for DuPont Luxprint Electroluminescent Inks" von DuPont, Version 1.0, 03/2002 entnommen werden.

### Konventionelle Leuchtdioden

Aufgrund ihres geringen Stromverbrauchs und ihrer niedrigen Betriebstemperatur sind auch konventionelle Leuchtdioden (LEDs) basierend auf anorganischen Halbleitermaterialien besonders geeignet für die vorliegende Anwendung. Bei Verwendung eines flexiblen Substrats 1 sollten allerdings lediglich kleine Leuchtdioden-Bausteine verwendet werden, damit diese bei einer Verformung des Substrats nicht beschädigt werden. Zur Beleuchtung grösserer Flächen können mehrere Leuchtdioden-Bausteine in einer Matrix angeordnet werden, beispielsweise indem die elektrolumineszente Schicht 14 der Ausführung nach Fig. 2 durch eine derartige Matrix ersetzt wird. Die obere leitfähige Schicht 15 wird durch Leiterbahnen zur Speisung der LEDs ersetzt.

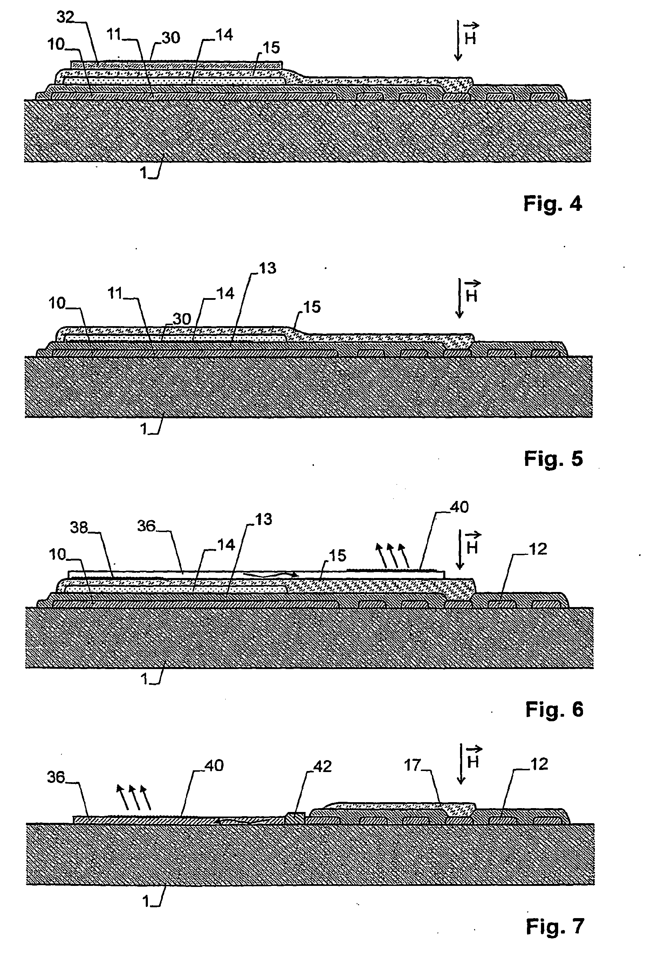

Eine Ausführung mit nur einer einzelnen LED wird weiter unten im Zusammenhang mit Fig. 6 beschrieben.

### Fluoreszente Materialien

Die Lichtquelle kann auch von fluoreszenten oder phosphoreszenten Materialien gebildet werden, die bei bzw. nach geeigneter Anregung Licht aussenden.

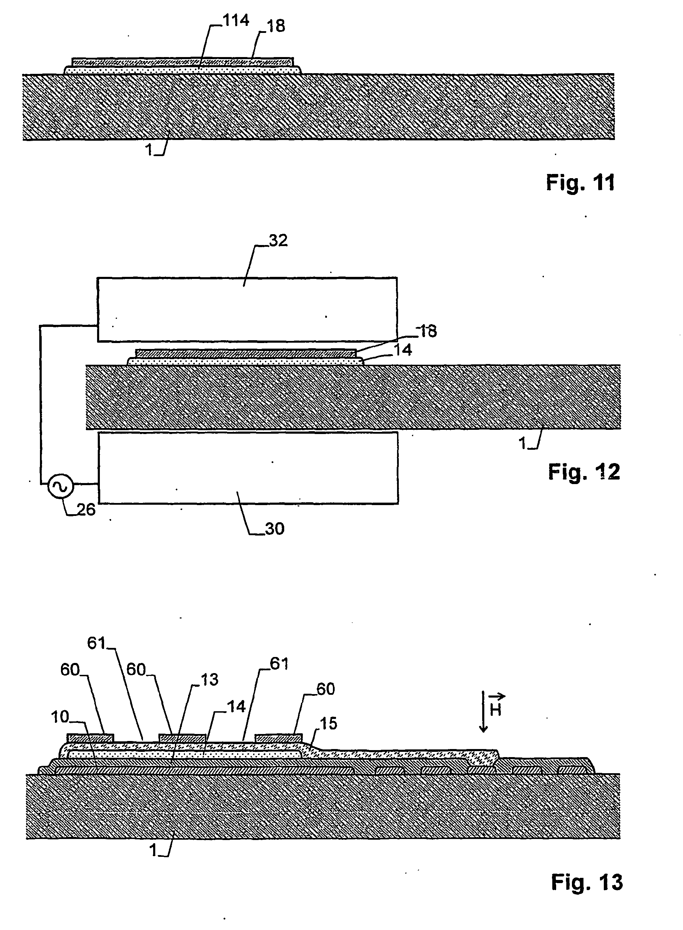

Bevorzugt sind insbesondere Materialien, die durch Bestrahlung mittels Licht angeregt werden können. Entsprechende Farbstoffe sind dem Fachmann bekannt. Ein Schnitt durch eine mögliche Ausführung eines entsprechenden Sicherheitsmerkmals ist in Fig. 11 dargestellt. Die Lichtquelle wird von einer Schicht 114 mit einem fluoreszenten Farbstoff gebildet. Auf der Schicht 114 ist die Lichtverarbeitungsvorrichtung z.B. in Form eines Volumen-hologramms 18 vorgesehen.

Zur Prüfung des Sicherheitsmerkmals nach Fig. 11 wird die Schicht 114 z.B. durch Bestrahlung z.B. mit UV-Licht angeregt. Das von der Schicht 114 erzeugte Licht wird sodann vom Volumenhologramm, wie im ersten Ausführungsbeispiel, zumindest teilweise abgebeugt und kann vom Prüfer untersucht werden.

### Nichtlinear-optische Materialien

Verschiedene organische oder anorganische Materialien besitzen starke nichtlinear-optische Eigenschaften. Derartige Materialien sind u.a. in der Lage, die Frequenz einfallenden Lichts zu vervielfachen, wobei die stärksten Effekte bei einer Frequenzverdopplung oder -verdreifachung beobachtet werden. Als anorganische Materialien kommen hier z.B. LiNbO₃, KDP (KH₂PO₄) oder KNbO₃ in Frage. Im organischen Bereich ist ein breites Spektrum von Molekülen mit delokalisierem Elektronensystem und Donor- und Akzeptorgruppen bekannt, die starke nichtlinear-optische Eigenschaften besitzen, wie z.B. 2-Methyl-4-nitroaniline (MNA), Methyl-(2,4-dinitro-phenyl)-aminopropanoat (MAP) oder Harnstoff. Entsprechende Lichtquellen können z.B. ein Pulver des entsprechenden Materials suspendiert in einer Polymer-Matrix oder als Seitengruppen in einer Polymer-Matrix enthalten. Um nichtlinear-optische Effekte zweiter Ordnung zu begünstigen, können, insbesondere bei Verwendung organischer Materialien, die nichtlinear-optischen Moleküle vor dem Aushärten der Matrix durch Anlegen eines elektrischen Felds ausgerichtet werden.

Eine nichtlinear-optische Lichtquelle dieser Art kann z.B. mit einem gepulst betriebenen Infrarot-Laser beleuchtet werden, worauf sie frequenzverdoppeltes Licht z.B. im grünen Spektralbereich aussendet.

Ein entsprechendes Sicherheitsmerkmal dieser Art kann wiederum z.B. wie in Fig. 11 gezeigt aufgebaut sein, wobei das nichtlinear-optische Material in der Schicht 114 untergebracht wird.

### Stromversorgung:

Bei Verwendung von LEDs, OLEDs oder elektrolumineszenten Lichtquellen müssen geeignete Mittel vorgesehen werden, um den nötigen Strom im der Lichtquelle zu erzeugen.

Im folgenden werden einige Beispiele für Stromversorgungen vorgestellt.

### Induktive Kopplung

Eine Induktive Einkopplung elektrischer Energie wurde bereits im Ausführungsbeispiel nach Fig. 2 verwendet. Damit Spannung induktiv in das Sicherheitsmerkmal eingekoppelt werden kann, muss dieses eine Spule mit mindestens einer Wicklung aus einem leitfähigen Material besitzen. Vorzugsweise sind mehrere Wicklungen vorgesehen. Die Spule kann, wie in Fig. 1 schematisch dargestellt, neben der Lichtquelle, aber auch z.B. unterhalb der Lichtquelle oder um die Lichtquelle herum angeordnet sein.

Die Spule und der von der Lichtquelle gebildete Kondensator bilden, in erster Näherung, einen LC-Schwingkreis. Benötigt die Lichtquelle eine hohe Spannung, so kann die Frequenz des magnetischen Wechselfelds H̅ in die Nähe der Resonanz des Schwingkreises gelegt werden.

### Kapazitive Kopplung

Anstelle der induktiven Kopplung kann auch eine kapazitive Kopplung verwendet werden. Eine Ausführung eines entsprechenden Sicherheitsmerkmals 5 ist in Fig. 3 dargestellt. Die Lichtquelle dieser Ausführung ist im wesentlichen gleich aufgebaut wie jene der Ausführung nach Fig. 2 und besitzt eine elektrolumineszente Schicht 14 auf einer dielektrischen Schicht 13 und einer unteren elektrisch leitfähigen Schicht 11. Auf der elektrolumineszenten Schicht 14 ist eine transparente, obere leitfähige Schicht 15 angeordnet. Im Gegensatz zur Ausführung nach Fig. 2 ist jedoch keine Spule vorgesehen. Vielmehr bildet die obere leitfähige Schicht 15 eine Elektrode 24, z.B. neben der Lichtquelle.

Um die Lichtquelle zum Leuchten anzuregen, wird über die Elektroden 11 und 24 kapazitiv eine Spannung eingekoppelt. Hierzu kann, wie in Fig. 3 schematisch dargestellt, ein Prüfgerät mit einer Wechselspannungsquelle 26 und zwei externen Elektroden 27, 28 verwendet werden. Die beiden externen Elektroden 27, 28 sind so angeordnet und geformt, dass jede von Ihnen in die Nähe einer der Elektroden 11 bzw. 24 des Sicherheitsmerkmals gebracht werden kann. Beispielsweise kann das Substrat 1 auf die Elektroden gebracht und so positioniert werden, dass die Elektroden 27 und 11 sowie 28 und 24 je einen Kondensator bilden, über welchen ein Wechselstrom in das Sicherheitsmerkmal 5 fliesen kann.

Bei dieser Ausführung kann die Schicht 11 auch entfallen, in welchem Fall die Elektrode 27 einen Kondensator zusammen mit Elektrode 16 bildet.

### Direkte Feldeinkopplung

Es ist auch denkbar, die elektrolumineszente Schicht 14 direkt in ein externes elektrisches Wechselfeld einzubringen. Dies ist in Fig. 12 illustriert. Das hier gezeigte Sicherheitsmerkmal benötigt insbesondere keine Elektroden, sondern lediglich eine elektrolumineszente Schicht 14.

Hier besitzt das Prüfgerät zwei Elektrodenplatten 30, 32, von denen mindestens eine, z.B. Elektrodenplatte 32, transparent ist. Zumindest der Bereich des Sicherheitsdokuments, welcher die elektrolumineszente Schicht 14 trägt, wird zwischen die Elektroden 30, 32 eingebracht, worauf an die Elektroden 30, 32 eine Wechselspannung angelegt wird. Diese Spannung erzeugt ein Feld, welches die Schicht des elektrolumineszenten Materials durchsetzt und diese zum Leuchten bringt. Die optischen Effekte, die von der Lichtverarbeitungsvorrichtung erzeugt werden, können direkt durch die mindestens eine transparente Elektrodenplatte 32 beobachtet werden.

### Direkter elektrischer Kontakt

Auf dem Substrat können auch leitfähige Elektroden aufgebracht werden, die elektrische Kontaktflächen bilden.

### Lichtverarbeitungsvorrichtung:

Die Lichtverarbeitungsvorrichtung dient zum Ablenken, Reflektieren, Polarisieren oder zum teilweisen Absorbieren des Lichts von der Lichtquelle. Sie kann in verschiedener Art ausgestaltet sein. Ihre Aufgabe liegt unter anderem darin, dem Prüfenden ein weiteres Mittel zur Verfügung zu stellen, um die Echtheit des Sicherheitsdokuments zu prüfen. Insbesondere sollte sie so ausgestaltet sein, dass sie dem Licht von der Lichtquelle gewisse Charakteristika verleiht, die von Auge und/oder mit geeigneten Geräten einfach überprüft werden können.

Bevorzugte Ausführungen der Lichtverarbeitungsvorrichtung, welche einzeln oder in Kombination eingesetzt werden können, sind im Folgenden beschrieben.

### Volumenhologramme

In einer Ausführung eines Sicherheits dokumentes enthält die Lichtverarbeitungsvorrichtung ein oder mehrere Volumenhologramme, wie dies bereits zu Fig. 2 beschrieben wurde. Unter Volumenhologramm werden dabei Hologramme verstanden, deren Dicke wesentlich grösser als eine Lichtwellenlänge ist, derart das Beugungseffekte nur unter dem jeweiligen Bragg-Winkel sichtbar sind.

Geeignete Materialien und Techniken zum Erzeugen von Volumenhologrammen sind z.B. aus EP 1 091 267 und WO 03/036389 bekannt.

Wird das Volumenhologramm über der Lichtquelle angeordnet, so sollte es ein Transmissions-Volumenhologramm sein, welches von einer Seite einfallendes Licht derart zu beugen vermag, dass es immer noch (wie auch nicht gebeugtes Licht) durch die gegenüberliegende Seite (aber in einer anderen Richtung als nicht gebeugtes Licht) austritt. Damit dies möglich ist, sollten die lokalen Gitterebenen entsprechender Hologramme ungefähr parallel oder unter einem relativ kleinen Winkel zum Normalenvektor der Schicht stehen.

Das Volumenhologramm kann z.B. ein homogenes Gitter sein, welches Licht einer gegebenen Wellenlänge in eine gegebene Richtung ablenkt. In diesem Falle kann das Sicherheitsmerkmal 5 geprüft werden, indem verifiziert wird, ob unter der gegebenen Richtung ein entsprechender Lichtreflex beobachtet werden kann. Wenn die Lichtquelle polychrom ist, kann unter der gegebenen Richtung ein charakteristischer, mehr oder weniger deutlicher Regenbogen-effekt beobachtet werden.

Das Volumenhologramm kann jedoch auch eine kompliziertere Gitterstruktur besitzen und z.B. ein dreidimensionales Objekt wiedergeben.

Bei dem erfindungsgemäßen Sicherheitsdokument enthält die Lichtverarbeitungsvorrichtung sowohl ein Transmissions-Volumenhologramm als auch ein Reflektions-Volumenhologramm, welches in der gleichen Schicht wie das Transmissions-Volumenhologramm oder in einer separaten Schicht eingeschrieben werden kann. In diesem Falle ist das Reflektions-Volumenhologramm bei Umgebungslicht sichtbar, während das Transmissions-Volumenhologram nur bei eingeschalteter Lichtquelle sichtbar wird.

Das Volumenhologramm kann auch zwischen der Lichtquelle und den Substrat 1 angeordnet werden. In diesem Fall ist, falls das Substrat 1 nicht transparent ist, das Volumenhologramm als Reflektions-Volumenhologramm auszugestalten.

### Oberflächen-Hologramme

Zusätzlich zum erwähnten Volumenhologramm kann die Lichtverarbeitungsvorrichtung auch ein Oberflächenhologramm 30 enthalten, wie dies in Fig. 4 dargestellt ist. Unter Oberflächenhologramm wird dabei eine Beugungsstruktur verstanden, welche höchstens einige wenige Wellenlängen dick ist, so dass es zu Abbeugungen auch deutlich ausserhalb der jeweiligen Bragg-Bedingungen kommt.

Das Oberflächen-Hologramm 30 kann z.B. in bekannter Weise durch Prägung auf der Oberfläche einer Schicht 32 erzeugt werden.

Wird das Oberflächen-Hologramm 30 über der Lichtquelle angeordnet, so muss die Schicht 32 transparent sein.

Das Oberflächen-Hologramm 30 kann auch direkt auf die Schicht 15 aufgeprägt werden, wobei in diesem Fall die Schicht 32 entfallen kann.

Das Oberflächen-Hologramm 30 kann, wie in Fig. 5 dargestellt, auch unterhalb der Lichtquelle bzw. elektrolumineszenten Schicht 14 angeordnet werden. In diesem Fall braucht es nicht auf einer transparenten Schicht angeordnet zu werden, da es Licht nach oben in die Schicht 14 zurückwerfen soll.

### Wellenleiter

Die Lichtverarbeitungsvorrichtung kann auch einen Wellenleiter aufweisen. Darunter wird ein transparentes Bauteil verstanden, welches in mindestens einer Richtung wesentlich länger als dick ist, wobei es in der Lage ist, Licht in diese Richtung aufgrund von Totalreflektion zu leiten.

Ein entsprechendes Sicherheitsmerkmal ist in Fig. 6 dargestellt. Der Wellenleiter 36 wird von einer transparenten Schicht gebildet und ist teilweise über der Lichtquelle bzw. der elektrolumineszenten Schicht 14 angeordnet. Damit Licht in den Wellenleiter eingekoppelt werden kann, ist im Bereich der Lichtquelle eine Gitterstruktur 38 z.B. in Form eines Oberflächengitters oder eines Volumenhologramms vorgesehen. Die Gitterstruktur 38 lenkt einen Teil des Lichts von der Lichtquelle in den Wellenleiter 36 hinein ab, so dass dieses sich durch den Wellenleiter ausbreitet. Beobachtet werden kann das Licht z.B. am Stirnende des Wellenleiters. Es kann auch, an einem Ort entfernt von der Lichtquelle, eine zweite Gitterstruktur 40 oder eine andere das Licht streuende Struktur vorgesehen sein, die das Licht auskoppelt.

Anstelle von Gitterstrukturen können z.B. auch Strukturen der in WO 03/098280 beschriebenen Art eingesetzt werden.

Die Verwendung eines Wellenleiters ist insbesondere auch vorteilhaft im Zusammenhang mit einer kompakten Lichtquelle, wie z.B. einer anorganischen LED. Dies ist in Fig. 7 illustriert, wo eine kleine LED 42 als Lichtquelle verwendet wird. die LED 42 wird, wie in der Ausführung nach Fig. 2, von einer Spule 12 mit Strom versorgt.

Das Licht der LED 42 tritt im Ausführungsbeispiel nach Fig. 7 seitlich aus und wird direkt stirnseitig in einen Wellenleiter 36 eingekoppelt. Zum seitlichen Auskoppeln des Lichts aus dem Wellenleiter 36 ist wiederum eine Gitterstruktur 40 vorgesehen.

### Andere Licht brechende Strukturen

Zusätzlich zu Hologrammen und Wellenleitern können auch andere, das Licht von der Lichtquelle brechende Strukturen als Lichtverarbeitungsvorrichtung vorgesehen sein.

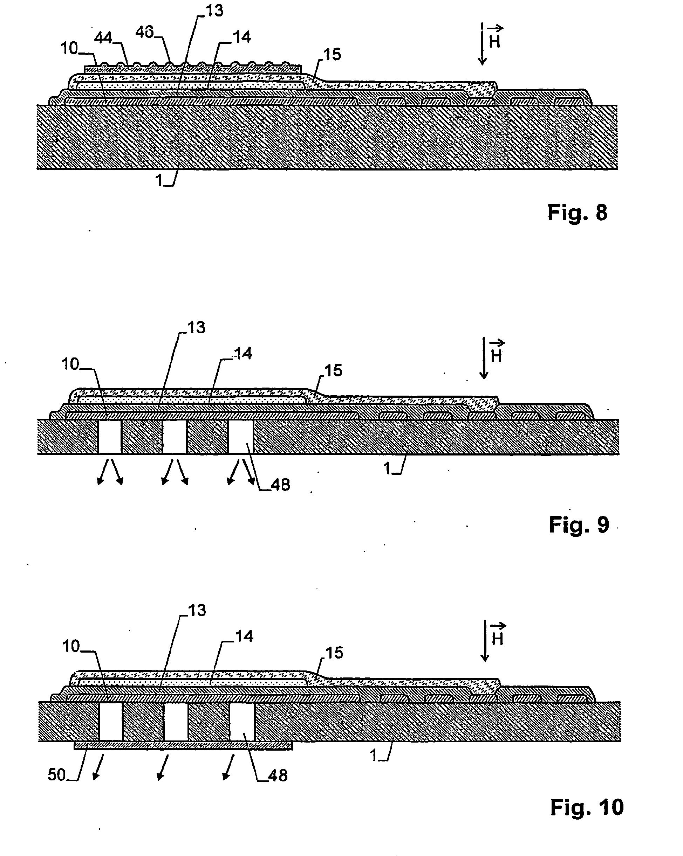

In Fig. 8 ist eine Ausführung illustriert, bei der auf der elektrolumineszenten Schicht 14 eine transparente Platte 44 mit einer Vielzahl von Mikrolinsen 46 angeordnet ist. Die Mikrolinsen ändern die Richtungsverteilung des aus der Lichtquelle 14 austretenden Lichts, was vom Prüfer bzw. einem Prüfgerät beobachtet werden kann.

Die Platte 44 kann z.B. auch eine Fesnel-Linse oder andere Oberflächenstrukturen enthalten. Von einem Oberflächenhologramm unterscheidet sich diese Lösung dadurch, dass die Oberflächenstrukturen insbesondere in Richtungen parallel zur Oberfläche typische Grössen bzw. Abmessungen besitzen, die wesentlich grösser sind als die Wellenlänge des Lichts von der Lichtquelle.

Anstelle einer ausgedehnten, diffus strahlenden elektrolumineszenten Schicht kann zur Beleuchtung der Platte 44 vorteilhaft auch eine Matrix aus anorganischen kleinen LEDs oder kleinen OLEDs verwendet werden, wobei pro LED bzw. OLED z.B. eine Mikrolinse 46 vorgesehen ist. Da es sich in diesem Fall in erster Näherung um punktförmige Lichtquellen handelt, kann auf diese Weise eine definierte Abbildungsoptik erzeugt werden, die es z.B. erlaubt, das Licht der LEDs auf bestimmte Punkte zu fokussieren oder in vorgegebene Richtungen zu werfen.

### Polarisatoren

Die Lichtverarbeitungsvorrichtung kann auch zusätzlich einen oder mehrere Polarisatoren enthalten. Beispielsweise kann die Platte 44 der Ausführung nach Fig. 8 durch eine das Licht polarisierende Folie ersetzt werden.

In diesem Fall kann zur Echtheitsprüfung das aus dem Sicherheitsmerkmal austretende Licht mittels einem zweiten Polarisators analysiert werden.

### Masken

Die Lichtverarbeitungsvorrichtung kann auch zusätzlich eine Maske bilden, welche das Licht von der Lichtquelle ortsabhängig unterschiedlich stark abblendet, sei es durch Reflektion oder Absorption. Beispielsweise kann die Maske eine Vielzahl von lichtdurchlässigen Löchern aufweisen, durch welche das Licht von der Lichtquelle treten kann, und ansonsten das Licht teilweise oder vollständig abblenden.

So kann die Platte 44 der Ausführung nach Fig. 8 durch eine Lochmaske 60 mit einer Vielzahl von Lochern 61 ersetzt werden, die für den Beobachter ein charakteristisches Punktmuster erzeugt. Eine entsprechende Ausführung ist in Fig. 13 dargestellt.

Die Verwendung einer Lochmaske erlaubt es beispielsweise, mehrere, visuell getrennte, nicht zusammenhängende leuchtende Bereiche an den Orten der Löcher 61 zu bilden, und dies mit nur einer Struktur zum Ansteuern der Lichtquelle.

Die Verwendung einer Maske erlaubt es ausserdem, den leuchtenden Bereich klar zu strukturieren, selbst wenn die Lichtquelle selbst schwer zu strukturieren ist. Insbesondere können in der Maske mindestens eine transparente Öffnung vorgesehen sein, durch welche das Licht der Lichtquelle austritt, wobei die Öffnung allseitig von lichtundurchlässigem Material begrenzt ist, d.h. von einem Material, welches wesentlich weniger Licht durchlässt als die Öffnung. Dabei ist der Begriff "Öffnung" im optischen Sinn zu verstehen, d.h. es handelt sich um einen Bereich, der optisch durchlässig ist, z.B. ein Loch in der Maske oder ein Fenster.

In einer bevorzugten Ausführung bilden die Öffnungen der Maske einen numerischen oder alphanumerischen Schriftzug, z.B. eine Zahl, die den Notenwert darstellt, oder eine Abkürzung oder ein Logo.

Es ist auch denkbar, zwischen der elektrolumineszenten Schicht und der Platte 44 eine Lochmaske anzuordnen, und zwar so, dass ein Loch unter jeder Mikrolinse 46 zu liegen kommt. Damit verarbeitet jede Mikrolinse 46 Licht einer im wesentlichen punktförmigen Lichtquelle, was es erlaubt, das Licht z.B. an einem bestimmten Ort fokussieren oder in eine bestimmte Richtung zu werfen.

Eine besonders vorteilhafte Ausführung ist in Fig. 9 dargestellt. Hier wird die Lochmaske vom Substrat 1 gebildet, indem das Substrat 1 unterhalb der elektrolumineszenten Schicht 14 an bestimmten Orten lichtdurchlassig ausgestaltet wurde, z.B. mittels Perforationen 48. Entsprechende Techniken zur Laserperforation von Substraten 1 sind z.B. in WO 97/18092 und WO 04/011274 beschrieben.

Damit das Licht durch die Perforationen 48 treten kann, müssen die unter der elektrolumineszenten Schicht 14 angeordneten Schichten 10 und 13 transparent sein.

In der in Fig. 9 dargestellten Ausführung kann das Sicherheitsmerkmal verifiziert werden, indem die Lichtquelle zum Leuchten gebracht und sodann das Dokument von der der Lichtquelle gegenüberliegenden Seite betrachtet wird um zu prüfen, ob Licht durch die Perforationen 48 tritt.

Das aus den Perforationen 48 austretende Licht kann auch noch durch weitere Teile der Lichtverarbeitungsvorrichtung geführt werden. Insbesondere kann, wie in Fig. 10 dargestellt, am Ausgang der Perforationen 48 eine Hologrammschicht 50 vorgesehen sein, oder eine andere Struktur zum definierten Abbeugen des austretenden Lichts. Die Kombination einer derartigen Struktur mit den Perforationen 48 ist besonders vorteilhaft, weil das aus den Perforationen 48 definiertere Richtungsverteilung hat als das Licht, das direkt von der diffus leuchtenden elektrolumineszenten Schicht 14 stammt, was eine effizientere Beugung oder Abbildung in einem Hologramm oder einer Linse erlaubt.

Vorzugsweise sind die Perforationen bzw. lichtdurchlässigen Löcher deshalb relativ klein und besitzen einen Durchmesser von z.B. höchstens 100 µm.

In den soweit beschriebenen Ausführungen besteht die Maske aus einer absorbierenden oder reflektierenden Schicht, in welcher Perforationen angebracht sind. Sie kann jedoch auch aus einer Schicht ohne Perforationen bestehen, die im Bereich der "Löcher" transparent und ansonsten z.B. mit licht absorbierender Farbe bedruckt ist.

### Anwendungen:

Prinzipiell ist das erfindungsgemässe Sicherheitsmerkmal für alle Sicherheitsdokumente geeignet, wie z.B. Banknoten oder andere Wertpapiere, Pässe oder andere Identitätsdokumente, Urkunden, etc. Die hier beschriebenen, in Schichten aufgebauten Sicherheitsmerkmale eignen sich insbesondere auch für Sicherheitsdokumente mit flexiblem Substrat 1, auch für Substrate aus Papier oder Kunststoff.

### Bemerkungen:

In den Beispielen gemäss Figuren wurde das Sicherheitsmerkmal 5, wie erwähnt, direkt auf das Substrat 1 aufgebracht, z.B. mittels Drucktechnik. Es ist jedoch auch möglich, das Sicherheitsmerkmal 5 auf einen Träger separat vom Substrat 1 aufzubringen, und auf diese Weise vorzufertigen, so dass das Sicherheitsmerkmal 5 als Ganzes in einem Schritt auf das Substrat 1 aufgebracht werden kann. Die Herstellung auf einem separaten Träger hat den Vorteil, dass auch mit dem Substrat 1 eventuell nicht kompatible Herstellungstechniken, wie z.B. Spin-Coating und/oder Ätztechniken eingesetzt werden können.

Zusätzlich zu den in den Beispielen gezeigten Schichten kann das Sicherheitsmerkmal 5 noch weitere Schichten enthalten, insbesondere Schutzschichten ober- und/oder unterhalb der übrigen Schichten, um diese vor mechanischen Einflüssen sowie schädigenden Substanzen, insbesondere Sauerstoff oder Fecuhtigkeit, zu schützen.

In einer weiteren vorteilhaften Ausführung kann das Substrat 1 auch transparent sein, zumindest im Bereich eines Teils des Sicherheitsmerkmals. In diesem Fall kann die Lichtverarbeitungsvorrichtung mindestens teilweise auch im Substrat 1 oder zwischen dem Substrat und der Lichtquelle angeordnet sein. Ein Beispiel fur eine derartige Ausführung ist das Dokument gemäss Fig. 9 oder 10.

Das Substrat 1 kann auf seiner Oberfläche unterhalb der Lichtquelle z.B. auch ein Reflektionshologramm oder andere reflektierende Strukturen tragen, die Teil der Lichtverarbeitungsvorrichtung bilden.

## Patentansprüche

1. Sicherheitsdokument mit einem Substrat (1) und einem auf dem Substrat (1) angeordneten Sicherheitsmerkmal (5) zur Verifikation der Echtheit des Sicherheitsdokuments; wobei das Sicherheitsmerkmal (5) eine Lichtquelle (14, 42, 114) aufweist, mit welcher Licht aussendbar ist, und eine Lichtverarbeitungsvorrichtung (18, 30, 40, 46, 48) zum Ablenken, Reflektieren, Polarisieren und/oder teilweisem Absorbieren des Lichts von der Lichtquelle (14, 42, 114), **dadurch gekennzeichnet, dass** die Lichtverarbeitungsvorrichtung (18, 30, 40, 46, 48) ein Transmissions-Volumenhologramm (18) und ein Reflektions-Volumenhologramm aufweist.

2. Sicherheitsdokument nach Anspruch 1, **dadurch gekennzeichnet, dass** die Lichtquelle (14, 42, 114) durch elektrischen Strom zum Leuchten anregbar ist.

3. Sicherheitsdokument nach Anspruch 2, **dadurch gekennzeichnet, dass** die Lichtquelle (14, 42, 114) ein elektrolumineszentes Material, insbesondere eine elektrolumineszente Tinte, aufweist.

4. Vorrichtung nach einem der vorangehenden Ansprüche, **dadurch gekennzeichnet, dass** die Lichtquelle (14, 42, 114) mindestens eine organische oder anorganische Leuchtdiode aufweist.

5. Sicherheitsdokument nach Anspruche 1, **dadurch gekennzeichnet, dass** die Lichtquelle (14, 42, 114) durch Bestrahlung mit infrarotem, sichtbarem oder ultraviolettem Licht zum Leuchten anregbar ist.

6. Sicherheitsdokument nach einem der vorangehenden Ansprüche, **dadurch gekennzeichnet, dass** die Lichtquelle (14, 42, 114) ein fluoreszentes, phosphoreszentes oder nichtlinear-optisches Material aufweist.

7. Sicherheitsdokument nach einem der vorangehenden Ansprüche, **dadurch gekennzeichnet, dass** das die Lichtquelle (14, 42, 114) monochrom ist.

8. Sicherheitsdokument nach einem der Ansprüche 1 bis 6, **dadurch gekennzeichnet, dass** das die Lichtquelle (14, 42, 114) polychrom ist.

9. Sicherheitsdokument nach einem der vorangehenden Ansprüche, **dadurch gekennzeichnet, dass** es Mittel (12; 11, 24) aufweist, um in der Lichtquelle (14, 42, 114) einen elektrischen Strom zu erzeugen.

10. Sicherheitsdokument nach Anspruch 9, **dadurch gekennzeichnet, dass** es mindestens eine Spule (12) aufweist, in welcher der Strom induktiv erzeugbar ist.

11. Sicherheitsdokument nach Anspruch 9, **dadurch gekennzeichnet, dass** es mindestens eine Elektrode (12; 11, 24) aufweist, über welche der Strom kapazitiv erzeugbar ist.

12. Sicherheitsdokument nach einem der vorangehenden Ansprüche, **dadurch gekennzeichnet, dass** die Lichtverarbeitungsvorrichtung (18, 30, 40, 46, 48) einen Wellenleiter (36) aufweist und insbesondere dass am Wellenleiter eine streuende Struktur, insbesondere eine Gitterstruktur (38, 40), zum seitlichen Ein- und/oder Auskoppeln des Lichts angeordnet ist.

13. Sicherheitsdokument nach einem der vorangehenden Ansprüche, **dadurch gekennzeichnet, dass** die Lichtverarbeitungsvorrichtung (18, 30, 40, 46, 48) eine Oberflächenstruktur (46) mit einer typischen Grösse wesentlich Grösser als die Wellenlänge des Lichts der Lichtquelle (14, 42, 114) aufweist, und insbesondere dass die Oberflächenstruktur (46) eine oder mehrere Linsen und/oder eine oder mehrere Fesnel-Linsen bildet.

14. Sicherheitsdokument nach einem der vorangehenden Ansprüche, **dadurch gekennzeichnet, dass** die Lichtverarbeitungsvorrichtung (18, 30, 40, 46, 48) eine Maske (1, 48) aufweist, die das Licht von der Lichtquelle (14, 42, 114) ortsabhängig unterschiedlich abblendet.

15. Sicherheitsdokument nach Anspruch 14, **dadurch gekennzeichnet, dass** die Maske eine Vielzahl von lichtdurchlässigen Löchern (48) aufweist, durch welche das Licht von der Lichtquelle (14, 42, 114) treten kann, wobei die Maske ansonsten das Licht teilweise oder vollständig abblendet.

16. Sicherheitsdokument nach einem der Ansprüche 14 oder 15, wobei die Maske mindestens eine lichtdurchlässige Öffnung aufweist, durch welche das Licht von der Lichtquelle (14, 42, 114) austreten kann, wobei die Öffnung allseitig von lichtundurchlässigem Material begrenzt ist.

17. Sicherheitsdokument nach einem der Ansprüche 14 bis 16, wobei die Öffnungen einen Schriftzug darstellen.

18. Sicherheitsdokument nach einem der vorangehenden Ansprüche, **dadurch gekennzeichnet, dass** die Lichtverarbeitungsvorrichtung (18, 30, 40, 46, 48) mindestens teilweise vom Substrat (1) gebildet ist.

19. Sicherheitsdokument nach den Ansprüchen 15 und 16 und nach Anspruch 18, **dadurch gekennzeichnet, dass** die Maske vom Substrat (1) gebildet ist und insbesondere dass im Substrat (1) im Bereich der Lichtquelle (14, 42, 114) eine Perforation (48) vorgesehen ist.

20. Sicherheitsdokument nach einem der vorangehenden Ansprüche, **dadurch gekennzeichnet, dass** die Lichtverarbeitungsvorrichtung (18, 30, 40, 46, 48) einen Polarisator zur Polarisation des Lichts aufweist.

21. Sicherheitsdokument nach einem der vorangehenden Ansprüche, **dadurch gekennzeichnet, dass** das Substrat (1) flexibel ist, und insbesondere dass das Substrat (1) aus Papier ist.

22. Sicherheitsdokument nach einem der vorangehenden Ansprüche, **dadurch gekennzeichnet, dass** es als Banknote ausgestaltet ist.

23. Sicherheitsdokument nach einem der vorangehenden Ansprüche, **dadurch gekennzeichnet, dass** das Sicherheitsmerkmal drucktechnisch auf das Substrat (1) aufgebracht ist.

24. Sicherheitsdokument nach einem der vorangehenden Ansprüche, **dadurch gekennzeichnet, dass** das Sicherheitsmerkmal drucktechnisch auf einen Träger aufgebracht ist, und dass der Träger auf dem Substrat (1) befestigt ist.

## Claims

1. A security document with a substrate (1) and a security feature (5) arranged on the substrate (1) for verifying the authenticity of the security document, wherein the security feature (5) comprises a light source (14, 42, 114), by means of which light can be emitted, and a light processing device (18, 30, 40, 46, 48) for deflecting, reflecting, polarizing and/or partially absorbing the light from the light source (14, 42, 114), **characterized in that** the light processing device (18, 30, 40, 46, 48) comprises a transmission volume hologram (18) and a reflection volume hologram.

2. Security document of claim 1, **characterized in that** the light source (14, 42, 114) can be excited to emit light by means of electrical current.

3. Security document of claim 2, **characterized in that** the light source (14, 42, 114) comprises an electroluminescent material, in particular an electroluminescent ink.

4. Device of claim 1, **characterized in that** the light source (14, 42, 114) comprises at least one organic or inorganic light emitting diode.

5. Security document of claim 1, **characterized in that** the light source (14, 42, 114) can be excited to emit light by irradiation with infrared, visible or ultraviolet light.

6. Security document of any of the preceding claims, **characterized in that** the light source (14, 42, 114) comprises a fluorescent, phosphorescent or nonlinear-optical material.

7. Security document of any of the preceding claims, **characterized in that** the light source (14, 42, 114) is monochrome.

8. Security document of any of the claims 1 to 6, **characterized in that** the light source (14, 42, 114) is polychrome.

9. Security document of any of the preceding claims, **characterized in that** it comprises means (12; 11, 24) to generate an electrical current in the light source (14, 42, 114).

10. Security document of claim 9, **characterized in that** it comprises at least one coil (12) in which the current can be generated inductively.

11. Security document of claim 9, **characterized in that** it comprises at least one electrode (12; 11, 24), by means of which the current can be generated capacitively.

12. Security document of any of the preceding claims, **characterized in that** the light processing device (18, 30, 40, 46, 48) comprises a waveguide (36), and in particular that a deflective structure, in particular a grating structure (38, 40), is arranged at the waveguide for laterally coupling the light in or out.

13. Security document of any of the preceding claims, **characterized in that** the light processing device (18, 30, 40, 46, 48) comprises a surface structure (46) with a typical size much larger than wavelength of the light from the light source (14, 42, 114), and in particular that the surface structure (46) forms one or more lenses and/or one or more Fresnel-lenses.

14. Security document of any of the preceding claims, **characterized in that** the light processing device (18, 30, 40, 46, 48) comprises a mask (1, 48) that blocks the light from the light source (14, 42, 114) differently depending on location.

15. Security document of claim 14, **characterized in that** the mask comprises a plurality of light-transmissive holes (48), through which the light from the light source (14, 42, 114) can pass, wherein the mask otherwise blocks the light partially or completely.

16. Security document of any of the claims 14 or 15, wherein the mask comprises at least one light-transmissive opening; through which the light from the light source (14, 42, 114) can exit, wherein the opening is limited on all sides by non-light-transmissive material.

17. Security document of any of the claims 14 to 16, wherein the openings represent a written text.

18. Security document of any of the preceding claims, **characterized in that** the light processing device (18, 30, 40, 46, 48) is formed at least partially by the substrate (1).

19. Security document of the claims 15 and 16 and of claim 18, **characterized in that** the mask is formed by the substrate (1), and in particular that a perforation (48) is provided in the substrate (1) in a region of the light source (14, 42, 114).

20. Security document of any of the preceding claims, **characterized in that** the light processing device (18, 30, 40, 46, 48) comprises polarizer for polarizing the light.

21. Security document of any of the preceding claims, **characterized in that** the substrate (1) is flexible, and in particular that the substrate (1) is of paper.

22. Security document of any of the preceding claims, **characterized in that** it is a bank note.

23. Security document of any of the preceding claims, **characterized in that** the security feature has been applied to the substrate (1) by printing techniques.

24. Security document of any of the preceding claims, **characterized in that** the security feature has been applied to a carrier by printing techniques and that the carrier is mounted to the substrate (1).

## Revendications

1. Document de sécurité comportant un substrat (1) et un signe distinctif de sécurité (5) disposé sur le substrat (1) servant à vérifier l'authenticité du document dé sécurité, le signe distinctif de sécurité (5) présentant une source lumineuse (14, 42, 114) laquelle permet d'émettre de la lumière, et un dispositif de traitement de la lumière (18, 30, 40, 46, 48) servant à dévier, à réfléchir, à polariser et/ou à absorber partiellement la lumière de la source lumineuse (14, 42, 114), **caractérisé en ce que** le dispositif de traitement de la lumière (18, 30, 40, 46, 48) présente un hologramme de volume par transmission (18) et un hologramme de volume par réflexion.

2. Document de sécurité selon la revendication 1, **caractérisé en ce que** la source lumineuse (14, 42, 114) peut être excitée par du courant électrique jusqu'à l'éclairage.

3. Document de sécurité selon la revendication 2, **caractérisé en ce que** la source lumineuse (14, 42, 114) présente un matériau électroluminescent, en particulier une encre électroluminescente.

4. Dispositif selon l'une quelconque des revendications précédentes, **caractérisé en ce que** la source lumineuse (14, 42, 114) présente au moins une diode électroluminescente organique ou inorganique.

5. Document de sécurité selon la revendication 1, **caractérisé en ce que** la source lumineuse (14, 42, 114) peut être excitée par rayonnement avec de la lumière infrarouge, transparente ou ultraviolette jusqu'à l'éclairage.

6. Document de sécurité selon l'une quelconque des revendications précédentes, **caractérisé en ce que** la source lumineuse (14, 42, 114) présente un matériau fluorescent, phosphorescent ou optique non linéaire.

7. Document de sécurité selon l'une quelconque des revendications précédentes, **caractérisé en ce que** la source lumineuse (14, 42, 114) est monochrome.

8. Document de sécurité selon l'une quelconque des revendications 1 à 6, **caractérisé en ce que** la source lumineuse (14, 42, 114) est polychrome.

9. Document de sécurité selon l'une quelconque des revendications précédentes, **caractérisé en ce qu'**il présente des moyens (12 ; 11, 24) de générer un courant électrique dans la source lumineuse (14, 42, 114).

10. Document de sécurité selon la revendication 9, **caractérisé en ce qu'**il présente au moins une bobine (12), dans laquelle le courant peut être généré de manière inductive.

11. Document de sécurité selon la revendication 9, **caractérisé en ce qu'**il présente au moins une électrode (12 ; 11, 24) par le biais de laquelle le courant peut être généré de manière capacitive.

12. Document de sécurité selon l'une quelconque des revendications précédentes, **caractérisé en ce que** le dispositif de traitement de la lumière (18, 30, 40, 46, 48) présente une guide d'ondes (36), et en particulier **en ce qu'**une structure dispersive, en particulier une structure réticulaire (38, 40) servant à moduler et/ou à découpler la lumière de manière latérale est disposée au niveau du guide d'ondes.

13. Document de sécurité selon l'une quelconque des revendications précédentes, **caractérisé en ce que** le dispositif de traitement de la lumière (18, 30, 40, 46, 48) présente une structure superficielle (46) présentant une taille typique sensiblement plus grande que la longueur des ondes de la lumière de la source lumineuse (14, 42, 114), et en particulier **en ce que** la structure superficielle (46) forme une ou plusieurs lentilles et/ou une ou plusieurs lentilles de Fresnel.

14. Document de sécurité selon l'une quelconque des revendications précédentes, **caractérisé en ce que** le dispositif de traitement de la lumière (18, 30, 40, 46, 48) présente un masque (1, 48), lequel tamise la lumière de la source lumineuse (14, 42, 114) de manière différente en fonction du lieu.

15. Document de sécurité selon la revendication 14, **caractérisé en ce que** le masque présente une pluralité de trous translucides (48) par lesquels la lumière de la source lumineuse (14, 42, 114) peut entrer, le masque tamisant dans les autres cas, partiellement ou complètement, la lumière.

16. Document de sécurité selon l'une quelconque des revendications 14 ou 15, le masque présentant au moins une ouverture translucide, par laquelle la lumière de la source lumineuse (14, 42, 114) peut sortir, l'ouverture étant délimitée de toutes parts par un matériau translucide.

17. Document de sécurité selon l'une quelconque des revendications 14 à 16, les ouvertures constituant une inscription.

18. Document de sécurité selon l'une quelconque des revendications précédentes, **caractérisé en ce que** le dispositif de traitement de la lumière (18, 30, 40, 46, 48) est formé au moins partiellement par le substrat (1).

19. Document de sécurité selon les revendications 15 et 16 et selon la revendication 18, **caractérisé en ce que** le masque est formé par le substrat (1), et en particulier **en ce qu'**une perforation (48) est prévue dans le substrat (1) dans la zone de la source lumineuse (14, 42, 114).

20. Document de sécurité selon l'une quelconque des revendications, **caractérisé en ce que** le dispositif de traitement de la lumière (18, 30, 40, 46, 48) présente un polarisant servant à polariser la lumière.

21. Document de sécurité selon l'une quelconque des revendications précédentes, **caractérisé en ce que** le substrat (1) est flexible, et en particulier **en ce que** le substrat (1) est en papier.

22. Document de sécurité selon l'une quelconque des revendications précédentes, **caractérisé en ce qu'**il est réalisé en tant que billet de banque.

23. Document de sécurité selon l'une quelconque des revendications précédentes, **caractérisé en ce que** le signe distinctif est apposé sur le substrat (1) par une technique d'impression.

24. Document de sécurité selon l'une quelconque des revendications précédentes, **caractérisé en ce que** le signe distinctif est apposé sur le support par une technique d'impression, et **en ce que** le support est fixé sur le substrat (1).
